# EUROPEAN PATENT APPLICATION

(11) **EP 4 482 208 A1**
(43) Date of publication of application: **25.12.2024**
(21) Application number: 23802625.6
(22) Date of filing: 23.04.2023
(51) Int. Cl.: H04W 36/00

(54) **COMMUNICATION METHOD AND APPARATUS**

(30) Priority: 13.05.2022 CN 202210523407
(71) Applicant: Huawei Technologies Co., Ltd., Shenzhen, Guangdong 518129 (CN)
(72) Inventor: FANG, Yuzhe, Shenzhen, Guangdong 518129 (CN); PENG, Wenjie, Shenzhen, Guangdong 518129 (CN); LI, Jie, Shenzhen, Guangdong 518129 (CN)
(74) Representative: Goddar, Heinz J.
(86) International application number: PCT/CN2023/089974
(87) International publication number: WO 2023/216851

(57) **Abstract**

This application provides a communication method and apparatus, to resolve a problem that frequent switching or even data flow interruption may occur when a terminal device performs cell selection or cell reselection. In this application, the terminal device receives first information from a network device, where the first information includes uptilt beam information, and the uptilt beam information indicates that there is an uptilt beam in a cell. The terminal device accesses the cell based on the uptilt beam information.

## Description

This application claims priority to Chinese Patent Application No. 202210523407.7, filed with the China National Intellectual Property Administration on May 13, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

As a new type of aircraft, an unmanned aerial vehicle (unmanned aerial vehicle, UAV) featuring flexibility, convenience, and stability is becoming more popular in today's society. A communication environment of the unmanned aerial vehicle is greatly different from that of a common terminal device. The unmanned aerial vehicle usually moves above a base station, and flight heights of different types of unmanned aerial vehicles may be different.

Base station signals mainly radiate toward the ground. Although some signals are diffused to the air due to reflection or scattering of ground signals, or some side lobes of a base station antenna radiate to the air, strength of signals received by the unmanned aerial vehicle is low generally. In addition, when the unmanned aerial vehicle flies at high altitude, because there are fewer obstacles, signals sent by the unmanned aerial vehicle can be received by a plurality of base stations, and the unmanned aerial vehicle can receive signals from more base stations. Consequently, interference increases in both an uplink direction and a downlink direction. Due to these factors, frequent switching or even data flow interruption may occur when the unmanned aerial vehicle performs cell selection or cell reselection.

Therefore, how to enable the unmanned aerial vehicle to perform cell selection or cell reselection more properly becomes an urgent problem to be resolved currently.

### SUMMARY

This application provides a communication method and apparatus, to resolve a problem that frequent switching or even data flow interruption may occur when an unmanned aerial vehicle performs cell selection or cell reselection.

According to a first aspect, an embodiment of this application provides a communication method, including: A terminal device receives first information from a network device, where the first information includes uptilt beam information, and the uptilt beam information indicates that there is an uptilt beam in a cell; and the terminal device accesses the cell based on the uptilt beam information.

Based on the method, the terminal device may determine, based on the uptilt beam information, that there is the uptilt beam in the cell, and select the cell for access, so that the terminal device can avoid selecting a beam that has undergone reflection or that is of an antenna side lobe, thereby avoiding frequent switching or even data flow interruption.

With reference to the first aspect, in some implementations of the first aspect, the accessing the cell based on the uptilt beam information includes: The terminal device measures beams in the cell; and the terminal device accesses the cell based on a first beam, where measurement of the first beam satisfies a reference signal received power RSRP threshold or a reference signal received quality RSRQ threshold, and the first beam is included in the beams in the cell.

With reference to the first aspect, in some implementations of the first aspect, the first information further includes uptilt beam index information, and the uptilt beam index information indicates uptilt beams in beams in the cell. The terminal device accesses the cell based on the uptilt beam index information.

With reference to the first aspect, in some implementations of the first aspect, the accessing the cell based on the uptilt beam index information includes: measuring the uptilt beams indicated by the uptilt beam index information, and accessing the cell based on a first uptilt beam, where measurement of the first uptilt beam satisfies an RSRP threshold or an RSRQ threshold, and the first uptilt beam is included in the uptilt beams indicated by the uptilt beam index.

With reference to the first aspect, in some implementations of the first aspect, the first information further includes uptilt beam coverage information, and the uptilt beam coverage information indicates coverage of the uptilt beam.

With reference to the first aspect, in some implementations of the first aspect, the coverage of the uptilt beam includes height coverage of the uptilt beam and/or width coverage of the uptilt beam.

With reference to the first aspect, in some implementations of the first aspect, the terminal device starts a timer, measures the beams in the cell, and accesses the cell based on the first beam, where the measurement of the first beam satisfies the RSRP threshold and the RSRQ threshold before the timer ends, and the first beam is included in the beams in the cell.

According to a second aspect, an embodiment of this application provides a communication method, including: A network device sends first information to a terminal device, where the first information includes uptilt beam information, the uptilt beam information indicates that there is an uptilt beam in a cell, and the uptilt beam information is for assisting the terminal device in accessing the cell.

With reference to the second aspect, in some implementations of the second aspect, the first information further includes uptilt beam index information, and the uptilt beam index information indicates an uptilt beam in beams in the cell.

With reference to the second aspect, in some implementations of the second aspect, the first information further includes uptilt beam coverage information, and the uptilt beam coverage information indicates coverage of the uptilt beam.

With reference to the second aspect, in some implementations of the second aspect, the coverage of the uptilt beam includes height coverage of the uptilt beam and/or width coverage of the uptilt beam.

According to a third aspect, an embodiment of this application provides a communication apparatus, including a module configured to perform the method described in any one of the first aspect or the possible implementations of the first aspect.

According to a fourth aspect, an embodiment of this application provides a communication apparatus, including a module configured to perform the method described in any one of the second aspect or the possible implementations of the second aspect.

According to a fifth aspect, an embodiment of this application provides a communication apparatus, including a processor and an interface circuit. The interface circuit is configured to receive a signal from another apparatus other than the apparatus, and send the signal to the processor, or send a signal from the processor to the another apparatus other than the apparatus. The processor is configured to implement, by using a logic circuit or by executing a code instruction, the method described in the first aspect or the possible implementations of the first aspect, or the method described in the second aspect or the possible implementations of the second aspect.

According to a sixth aspect, an embodiment of this application provides a computer-readable storage medium. The computer-readable storage medium stores a computer program or instructions. When the computer program or the instructions are executed by a computing device, the method described in the first aspect or the possible implementations of the first aspect is implemented, or the method described in the second aspect or the possible implementations of the second aspect is implemented.

According to a seventh aspect, an embodiment of this application provides a computer program product. The computer program product includes a computer program or instructions. When the computer program or the instructions are executed by a computing device, the method described in the first aspect or the possible implementations of the first aspect is implemented, or the method described in the second aspect or the possible implementations of the second aspect is implemented.

According to an eighth aspect, an embodiment of this application provides a communication system. The communication system includes one or more of the following: the communication apparatus provided in the third aspect, the fourth aspect, or the fifth aspect, the computer-readable storage medium provided in the sixth aspect, and the computer program product provided in the seventh aspect.

### BRIEF DESCRIPTION OF DRAWINGS

FIG. 1 is a possible diagram of a communication architecture according to an embodiment of this application;
FIG. 2a is a possible time domain diagram of a wide beam according to an embodiment of this application;
FIG. 2b is a possible time domain diagram of a narrow beam according to an embodiment of this application;
FIG. 3 is a block diagram of a possible cell selection process according to an embodiment of this application;
FIG. 4 is a block diagram of a possible cell reselection process according to an embodiment of this application;
FIG. 5 is a diagram of a possible communication system having an uptilt beam according to an embodiment of this application;
FIG. 6 is a schematic flowchart of a possible communication method according to an embodiment of this application;
FIG. 7 is a schematic flowchart of another possible communication method according to an embodiment of this application;
FIG. 8 is a schematic flowchart of still another possible communication method according to an embodiment of this application;
FIG. 9 is a block diagram of a communication apparatus according to an embodiment of this application; and
FIG. 10 is a block diagram of another communication apparatus according to an embodiment of this application.

### DESCRIPTION OF EMBODIMENTS

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), and a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, a 5th generation (5th generation, 5G) system or a new radio (new radio, NR) system, or applied to a future communication system or another similar communication system, a next generation wireless local area network system, or the like.

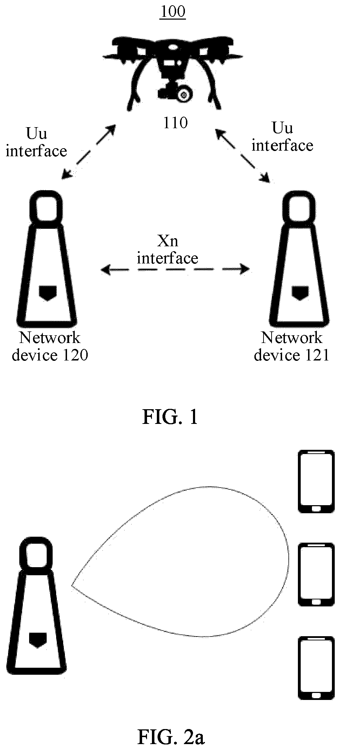

FIG. 1a is a possible diagram of a communication system to which an embodiment of this application is applicable. As shown in FIG. 1, the communication system 100 includes a network device and a terminal device.

The terminal device in this embodiment of this application may also be referred to as user equipment (user equipment, UE), a mobile station (mobile station, MS), a mobile terminal (mobile terminal, MT), or the like, and is a device that provides voice or data connectivity for a user, or may be an Internet of Things device. For example, the terminal device includes a handheld device, a vehicle-mounted device, or the like that has a wireless connection function. The terminal device may be a mobile phone (mobile phone), a tablet computer, a notebook computer, a palmtop computer, a mobile Internet device (mobile internet device, MID), a wearable device (such as a smartwatch, a smart band, or a pedometer), a virtual reality (virtual reality, VR) device, an augmented reality (augmented reality, AR) device, a wireless terminal in industrial control (industrial control), an intelligent robot, a wireless terminal in self-driving (self-driving), a wireless terminal in remote medical surgery (remote medical surgery), a wireless terminal in a smart grid (smart grid), or a wireless terminal in transportation safety (transportation safety), a wireless terminal in a smart city (smart city), a wireless terminal in a smart home (smart home), a flight device (for example, an intelligent robot, a hot air balloon, an unmanned aerial vehicle, or an airplane), or the like. In this embodiment of this application, devices implementing the foregoing functions are uniformly described by using the terminal device as an example. It should be understood that the terminal device in this embodiment of this application may alternatively be a chip in a terminal, a communication apparatus, a unit, a module or the like having a communication function, for example, a vehicle-mounted communication apparatus, a vehicle-mounted communication module, and a vehicle-mounted communication chip. The terminal device in this embodiment of this application is generally a terminal device whose height is greater than the network device. In FIG. 1, a first terminal device 110 is used as an example for presentation.

The network device in this embodiment of this application is a device that is in a network and that is configured to connect the terminal device to a wireless network. The network device may be a node in a radio access network, and may also be referred to as a base station, or may be referred to as a radio access network (radio access network, RAN) node (or device). The network device may be configured to mutually convert a received over-the-air frame and an Internet Protocol (IP) packet and serve as a router between the terminal device and a remaining portion of the access network, where the remaining portion of the access network may include an IP network. The network device may further coordinate attribute management of an air interface. For example, the network device may include a long term evolution (long term evolution, LTE) system or an evolved NodeB (NodeB, eNB, or e-NodeB, evolved NodeB) in an LTE-advanced (LTE-Advanced, LTE-A) system, may include a next generation NodeB (next generation NodeB, gNB) in a 5th generation (5th generation, 5G) mobile communication technology new radio (new radio, NR) system, may include a transmission reception point (transmission reception point, TRP), a home base station (for example, a home evolved NodeB, or a home NodeB, HNB), a baseband unit (baseband unit, BBU), a Wi-Fi access point (access point, AP), or the like, or may include a central unit (central unit, CU) and a distributed unit (distributed unit, DU) in a cloud access network (cloud radio access network, CloudRAN) system. This is not limited in this embodiment of this application. For another example, a network device in a V2X technology is a road side unit (road side unit, RSU). The RSU may be a fixed infrastructure entity supporting a V2X application, and may exchange a message with another entity supporting the V2X application. In FIG. 1, a first network device 120 and a second network device 121 are used as an example for presentation.

Further, the communication system 100 includes two types of communication interfaces: a Uu interface and an Xn interface.

The Uu interface is a communication interface between the terminal device and the network device. Uu interface-based communication may be as follows: A transmitter terminal device sends data to the network device through the Uu interface, and the network device sends the data to an application server for processing. Then, the application server delivers processed data to the network device, and the network device sends the processed data to a receiver terminal device.

The Xn interface is an interface for communication between network devices. For example, in FIG. 1, the first network device 120 exchanges information with the second network device 121 through the Xn interface.

To better understand the solutions in embodiments of this application, the following describes technical terms in embodiments of this application.

### (1) Beam

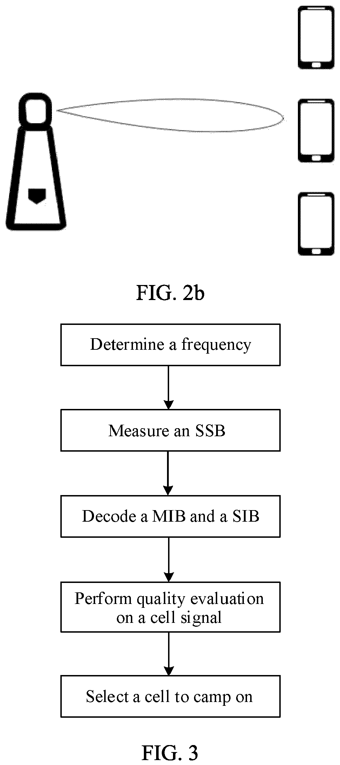

A signal is propagated in the air through an electromagnetic wave, and power loss occurs during transmission. In addition, a higher frequency of the electromagnetic wave indicates larger power loss and smaller coverage. Therefore, power loss of propagation of the electromagnetic wave in a low frequency band is small and coverage is large, and power loss of propagation of the electromagnetic wave in a high frequency band is large and coverage is small. When the signal is propagated by using the electromagnetic wave in a low frequency band, because the coverage is large, a small quantity of antennas may be used to transmit the signal at a wide angle. In this case, the signal is radiated as a wide beam. As shown in FIG. 2a, FIG. 2a is a diagram of a wide beam. A wide beam has a long coverage distance and a large distributed angle. Therefore, a single transmission can simultaneously cover a large quantity of terminal devices in different distances and directions. When the signal is propagated by using the electromagnetic wave in a high frequency band, a multi-antenna technology needs to be used to extend coverage of the signal because the power loss of propagation is large. In the multi-antenna technology, due to interference and a diffraction characteristic of a wave, after signals with different amplitudes and phases transmitted by different antennas are superimposed, energy increases in some directions and decreases in some directions, and an electromagnetic wave radiates into a beam with a small width and oriented to a specific direction. As shown in FIG. 2b, FIG. 2b is a diagram of a narrow beam. A distributed angle of a narrow beam is small. Therefore, a single transmission cannot cover terminal devices in different directions. With the feature of the multi-antenna, a beamforming process can be intervened to change an amplitude or a phase of a transmitted signal of each antenna, so that a final beam exactly has a desired width and orientation. The process is referred to as beamforming.

### (2) System information

System information (System information, SI) is information sent by a cell to a terminal device. In an NR system, the system information includes minimum system information (Minimum system information, MSI) and other system information (Other system information, OSI). The minimum system information includes a master information block (Master information block, MIB) and a system information block 1 (System Information Block 1, SIB 1). The system information is periodically sent.

The MIB is always transmitted on a broadcast channel (broadcast channel, BCH) with a periodicity of 80 ms and is repeated within 80 ms. The MIB includes a limited quantity of most important and commonly used transmission parameters, including parameters required to obtain the SIB 1 from the cell. The MIB includes indication information such as a system frame number (system frame number, SFN) and whether the cell is barred (cellBarred).

The SIB 1 is transmitted on a downlink shared channel (downlink shared channel, DL-SCH) with a periodicity of 160 ms, and a transmission repetition periodicity may be changed within 160 ms. A default transmission repetition periodicity of the SIB 1 is 20 ms, but an actual transmission repetition periodicity is implemented based on a network. The SIB 1 includes information about the availability and scheduling of other SIBs (for example, mapping of the SIB to the SI, a periodicity, an SI window size) and indicates whether one or more SIBs are provided only as required. In this case, UE performs configuration required for an SI request. The SIB 1 is a specific SIB in the cell.

The SIB 1 may also be referred to as remaining minimum system information (Remaining Minimum SI, RMSI). The RMSI generally includes system information including cell selection and initial access information as well as scheduling information of other SI. All system information except the MIB and the SIB 1 may be referred to as the OSI. The OSI is transmitted in the system information, and is sent based on a request rather than being periodically sent, to save power of a base station.

### (3) Cell selection and cell reselection

A network is deployed in cells, and each cell has its own coverage. When a terminal device is powered on or a radio link failure occurs, the terminal device performs a cell search process and selects a suitable cell for camping as soon as possible. The process is referred to as cell selection. After the terminal device camps on a cell, with movement of the terminal device, the terminal device may need to move to another cell having a higher priority or better signal for camping. The process is referred to as cell reselection. Cell selection is a process of finding a suitable cell as soon as possible, while cell reselection is a process of selecting a more suitable cell.

A cell selection process is shown in FIG. 3. FIG. 3 is a block diagram of a cell selection process according to an embodiment of this application. When the terminal device is powered on, the terminal device may determine an approximate range and a frequency of a synchronization signal and PBCH block (synchronization signal and PBCH block, SSB) signal based on a size of a synchronization raster. After determining the frequency, the terminal device starts to receive the SSB signal (a time-frequency domain location of the SSB signal) by using a current frequency as a center frequency. SSB signal-based radio resource measurement (Radio resource measurement, RRM) is mainly used for measurement of reference signal received power (Reference signal received power, RSRP) and/or reference signal received quality (Reference signal received quality, RSRQ). The terminal device obtains MIB information by decoding a physical broadcast channel (Physical broadcast channel, PBCH). According to a cellBarred indication in the MIB information, if a current cell is a barred cell, a cell search procedure is stopped and scanning of a next frequency is restarted. If the cell is allowed to access, system information carried in a SIB 1 needs to be obtained to achieve timing synchronization with the cell. Then, the terminal device determines a cell selection criterion, for example, an S criterion, based on a cell selection-related parameter included in the SIB information, to determine whether signal quality of the current cell can be selected as a cell to be camped on.

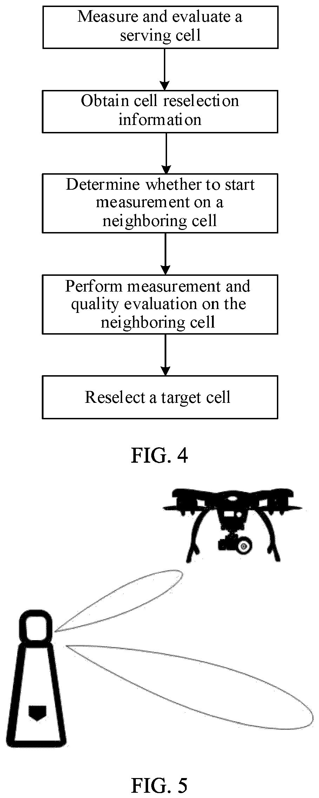

Cell reselection is shown in FIG. 4. FIG. 4 is a block diagram of a cell reselection process according to an embodiment of this application. The cell reselection can be classified into intra-frequency cell reselection and inter-frequency cell reselection. The intra-frequency cell reselection is performed on a same frequency, and does not include frequency priority processing. The inter-frequency cell reselection includes inter-frequency cell reselection and inter-system cell reselection. The best cell is determined based on frequency priority information. A cell that participates in reselection may be from a neighboring cell list carried in the SIB information, or may be a cell detected in a reselection process. The terminal device first measures and evaluates a serving cell, then receives the SIB information, obtains cell reselection information, and then determines whether to start measurement on a neighboring cell, to perform measurement and quality evaluation on the neighboring cell. If the neighboring cell meets a cell reselection requirement, the terminal device reselects the neighboring cell (a target cell).

As a new type of aircraft, an unmanned aerial vehicle featuring flexibility, convenience, and stability is becoming more popular in today's society. A communication environment of the unmanned aerial vehicle is greatly different from that of a common terminal device. The unmanned aerial vehicle generally moves above a base station, and flight heights of different types of unmanned aerial vehicles may be different.

Base station signals mainly radiate toward the ground. Although some signals are diffused to the air due to reflection or scattering of ground signals, or some side lobes of a base station antenna radiate to the air, generally, strength of signals received by the unmanned aerial vehicle is low. In addition, when the unmanned aerial vehicle flies at high altitude, because there are fewer obstacles, signals sent by the unmanned aerial vehicle can be received by a plurality of base stations, and the unmanned aerial vehicle can receive signals from more base stations. Consequently, interference increases in both an uplink direction and a downlink direction. FIG. 5 shows a possible communication system having an uptilt beam according to an embodiment of this application. During cell selection or cell reselection, an unmanned aerial vehicle usually attempts to access a corresponding cell after detecting that a beam satisfies a condition, and does not know which cells have uptilt beams, and which beams in the cells having the uptilt beams are corresponding uptilt beams. Therefore, the unmanned aerial vehicle may select a beam that has undergone reflection or that is of an antenna side lobe instantaneously. Consequently, frequent switching or even data flow interruption occurs when the unmanned aerial vehicle performs cell selection or cell reselection.

Therefore, how to enable the unmanned aerial vehicle to perform cell selection or cell reselection more properly becomes an urgent problem to be resolved currently.

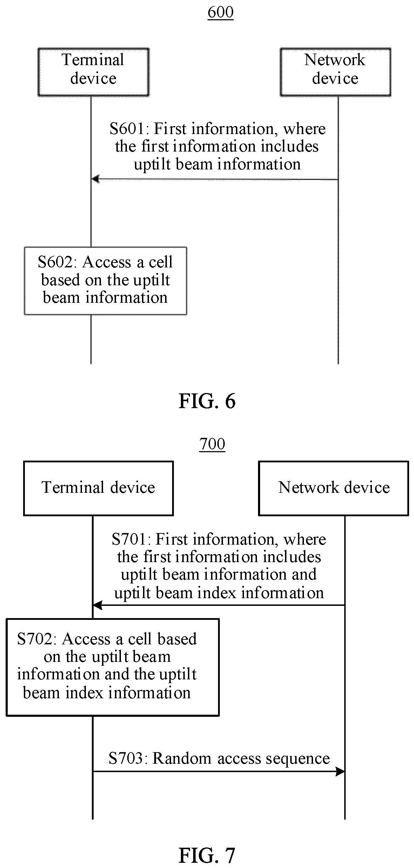

FIG. 6 is an example of a schematic flowchart of a communication method according to an embodiment of this application. The method provided in this embodiment of this application may be performed by a terminal device and a network device. The terminal device in FIG. 6 may be the terminal device in FIG. 1, or a unit, a module, or a chip in the terminal device. The network device mentioned in this embodiment of this application may be the network device in FIG. 1, or a unit, a module, or a chip in the network device.

As shown in FIG. 6, the method 600 includes the following steps.

S601: The terminal device receives first information from the network device, where the first information includes uptilt beam information.

The uptilt beam information indicates that there is an uptilt beam in a cell.

In a possible implementation, the first information may be system information.

In a possible implementation, the first information may be a MIB.

S602: The terminal device accesses the cell based on the uptilt beam information.

In a possible implementation, the terminal device determines, based on the uptilt beam information, that there is the uptilt beam in the cell, and then the terminal device measures beams in the cell having the uptilt beam, to determine whether to access the cell. For example, there are three beams in the cell: beam 1, beam 2, and beam 3, and the terminal device may measure the three beams in a specific order. In a possible implementation, the terminal device may measure the three beams in a random order. In a possible implementation, the terminal device may measure the three beams in a preset order. When the terminal device finds that a measurement result of one of the beams satisfies an access threshold, for example, a measurement result of beam 2 satisfies the access threshold, the terminal device accesses the cell based on beam 2. The access threshold may be an RSRP threshold or an RSRQ threshold, or the access threshold may be another threshold. This is not limited in embodiments of this application.

The terminal device may determine, based on the uptilt beam information, the cell having the uptilt beam, and access, through measurement, a cell having the uptilt beam and satisfying the access threshold, so that the terminal device can avoid selecting a beam that has undergone reflection or that is of an antenna side lobe, thereby avoiding frequent switching or even data flow interruption.

To further describe beneficial effects provided by embodiments of this application, the following describes an example.

In this example, there are two cells: cell A and cell B. There is no uptilt beam in cell A, and there is an uptilt beam in cell B. The terminal device needs to perform cell selection in cell A and cell B.

The terminal device receives system information from cell A. If the terminal device finds that there is no uptilt beam information in the system information of cell A, the terminal device does not select cell A. The terminal device receives system information from cell B. If the terminal device finds that there is the uptilt beam information in the system information of cell B, the terminal device further measures beams in cell B. If a measurement result of a beam satisfies the access RSRP or RSRQ threshold, the terminal device selects the beam in cell B for access.

In a possible implementation, the terminal device receives the system information from cell A. If the uptilt beam information in the system information of cell A indicates that there is no uptilt beam in the cell, the terminal device does not select cell A. The terminal device receives the system information from cell B. If the uptilt beam information indicates that there is an uptilt beam in the cell, the terminal device further measures the beams in cell B. If a measurement result of a beam satisfies the access RSRP or RSRQ threshold, the terminal device selects the beam in cell B for access.

The terminal device determines, based on the uptilt beam information, that there is no uptilt beam in cell A, and there is an uptilt beam in cell B, and selects cell B for access, so that the terminal device can avoid selecting a beam that has undergone reflection or that is of an antenna side lobe, thereby avoiding frequent switching or even data flow interruption.

Based on the content in FIG. 6, FIG. 7 is an example of a schematic flowchart of another communication method according to an embodiment of this application. As shown in FIG. 7, the method 700 includes the following steps.

S701: A terminal device receives first information from a network device, where the first information includes uptilt beam information and uptilt beam index information.

The uptilt beam information indicates that there is an uptilt beam in a cell. The uptilt beam index information indicates information about uptilt beams in beams in the cell.

Generally, there is more than one beam in the cell. Because the uptilt beam information only indicates that there is an uptilt beam in the cell, but does not specify which beams are uptilt beams, the terminal device may fail to select the uptilt beam only based on the uptilt beam information, and the uptilt beam index information may further indicate the uptilt beam to the terminal device.

In a possible implementation, the first information only includes the uptilt beam index information, and the uptilt beam index information indicates the information about the uptilt beams in beams in the cell. The terminal device may determine, only based on the uptilt beam index information, that there is uptilt beams in the beams in the cell, and may determine which beams are uptilt beams.

In a possible implementation, the first information is system information.

In a possible implementation, the uptilt beam information is carried in an MIB in the system information, and the uptilt beam index information is carried in a SIB 1 in the system information.

S702: The terminal device accesses the cell based on the uptilt beam information and the uptilt beam index information.

In a possible implementation, the terminal device determines, based on the uptilt beam information, that there is an uptilt beam in the cell, and determines, based on the uptilt beam index information, which beams in the cell are uptilt beams. In this way, the terminal device measures the uptilt beams indicated by the uptilt beam index information, and accesses the cell based on a first uptilt beam, where measurement of the first uptilt beam satisfies an RSRP threshold or an RSRQ threshold, and the first uptilt beam is included in the uptilt beams indicated by the uptilt beam. For example, there are three beams in the cell: beam 1, beam 2, and beam 3. Beam 1 is not the uptilt beam, and beam 2 and beam 3 are uptilt beams. The terminal device determines, based on the uptilt beam information, that there is an uptilt beam in the cell, and the terminal device determines, based on the uptilt beam index information, that beam 2 and beam 3 in the cell are uptilt beams. In this way, the terminal device may measure beam 2 and beam 3 in a specific order. In a possible implementation, the terminal device may measure the three beams in a random order. In a possible implementation, the terminal device may measure the two beams in a preset order. When the terminal device finds that a measurement result of one of the beams satisfies an access threshold, for example, an RSRP measurement result or an RSRQ measurement result of beam 2 satisfies the access threshold, the terminal device accesses the cell based on beam 2. The access threshold may be an RSRP threshold or an RSRQ threshold, or the access threshold may be another threshold. This is not limited in embodiments of this application.

In a possible implementation, the terminal device may determine, based on the uptilt beam index information, that there is uptilt beams in the cell, and may determine which beams are uptilt beams. In this way, the terminal device only needs to measure the uptilt beams, to determine whether to access the cell. For example, there are three beams in the cell: beam 1, beam 2, and beam 3. Beam 1 is not the uptilt beam, and beam 2 and beam 3 are uptilt beams. The terminal device determines, based on the uptilt beam index information, that beam 2 and beam 3 in the cell are uptilt beams. In this way, the terminal device may measure beam 2 and beam 3 in a specific order. In a possible implementation, the terminal device may measure the three beams in a random order. In a possible implementation, the terminal device may measure the two beams in a preset order. When the terminal device finds that a measurement result of one of the beams satisfies an access threshold, for example, an RSRP measurement result or an RSRQ measurement result of beam 2 satisfies the access threshold, the terminal device accesses the cell based on beam 2. The access threshold may be an RSRP threshold or an RSRQ threshold, or the access threshold may be another threshold. This is not limited in embodiments of this application.

The terminal device may determine, based on the uptilt beam information, a cell having an uptilt beam, and may determine a specific uptilt beam based on the uptilt beam index information, so that the terminal device can access the cell based on the uptilt beam, thereby ensuring signal quality, and avoiding frequent switching or even data flow interruption.

In a possible implementation, the first information further includes uptilt beam coverage information, and the uptilt beam coverage information indicates coverage of the uptilt beam. For example, the coverage of the uptilt beam includes height coverage of the uptilt beam and width coverage of the uptilt beam. The terminal device may first determine whether a height of the terminal device satisfies the height coverage of the uptilt beam. If yes, the terminal device measures whether RSRP or RSRQ of the beam satisfies a threshold. If yes, the terminal device accesses the cell based on the beam. If a current height of the terminal device does not satisfy the height coverage of the uptilt beam, the terminal device selects another beam.

The terminal device may determine, based on the uptilt beam information, a cell having an uptilt beam, may determine a specific uptilt beam based on the uptilt beam index information, and may determine, based on the uptilt beam coverage information, whether an uptilt beam is suitable, so that the terminal device selects a suitable uptilt beam to access the cell, thereby ensuring signal quality, and avoiding frequent switching or even data flow interruption.

S703: The terminal device sends a random access sequence to the network device.

According to the communication method provided in this embodiment of this application, the terminal device may determine, based on the uptilt beam information, the cell having the uptilt beam, may determine the specific uptilt beam based on the uptilt beam index information, and may determine, based on the uptilt beam coverage information, whether the uptilt beam is suitable, so that the terminal device selects a suitable uptilt beam to access the cell, thereby ensuring signal quality, and avoiding frequent switching or even data flow interruption.

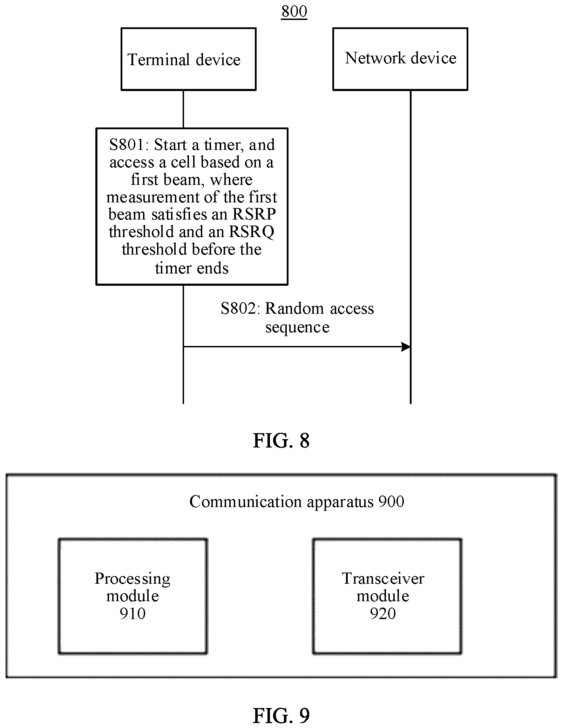

Based on the foregoing content, FIG. 8 is an example of a schematic flowchart of another communication method according to an embodiment of this application. As shown in FIG. 8, the method includes the following steps.

S801: A terminal device starts a timer, and accesses a cell based on a first beam, where measurement of the first beam satisfies an RSRP threshold and an RSRQ threshold before the timer ends.

It should be understood that the first beam is included in beams in the cell.

In a possible implementation, system information does not indicate an uptilt beam. When determining whether to access the cell, the terminal device may start the timer, and the terminal device measures beams in the cell within a time period in which the timer is started, and evaluates measurement results of the beams. If the measurement result of the first beam in the beams in the cell always satisfies a threshold, for example, the RSRP threshold or the RSRQ threshold, within the time period in which the timer is started, the terminal device accesses the cell based on the first beam. Based on the method, the terminal device may select a beam whose strength of a signal is stable for access, to avoid selecting a beam whose strength of a signal is unstable, thereby avoiding frequent switching or even data flow interruption.

In a possible embodiment, a timing length of the timer may be combined with a height of the terminal device. When the terminal device is at different heights, different timing duration is used to evaluate beam signal quality. A greater height of the terminal device indicates shorter timing duration. Higher altitude where the terminal device is located indicates a smaller range that may be covered by reflection or an antenna side lobe and a smaller probability that the terminal device selects a beam that has undergone reflection or that is of an antenna side lobe. Therefore, shorter timing is required.

In a possible implementation, the system information indicates an uptilt beam. According to the method 600 or the method 700 described above, the terminal device starts the timer, measures the beams in the cell having the uptilt beam, and accesses the cell based on the first beam. The measurement of the first beam satisfies the RSRP threshold and the RSRQ threshold before the timer ends. Based on the method, the terminal device may select a beam whose strength of a signal is stable for access, to avoid selecting a beam whose strength of a signal is unstable, thereby avoiding frequent switching or even data flow interruption.

S802: The terminal device sends a random access sequence to the network device.

According to the communication method provided in this embodiment of this application, the terminal device may select a beam whose strength of a signal is stable for access, to avoid selecting a beam whose strength of a signal is unstable, thereby avoiding frequent switching or even data flow interruption.

FIG. 9 is a block diagram of a communication apparatus according to an embodiment of this application. The communication apparatus may be configured to implement functions of the network device in the foregoing method embodiments. Therefore, beneficial effects of the foregoing method embodiments can also be implemented. In this embodiment of this application, the communication apparatus may be the network device in the foregoing method embodiments, or may be a module (for example, a chip) used in the foregoing network device.

As shown in FIG. 9, the communication apparatus 900 includes a processing module 910 and a transceiver module 920. The communication apparatus 900 is configured to implement functions of the terminal device in the embodiments corresponding to FIG. 6, FIG. 7, or FIG. 8.

When the communication apparatus 900 is configured to implement the functions of the terminal device in the method embodiments shown in FIG. 6, FIG. 7, or FIG. 8, an example is provided as follows.

The transceiver module 920 receives first information from a network device, where the first information includes uptilt beam information, and the uptilt beam information indicates that there is an uptilt beam in a cell.

The first information further includes uptilt beam index information, and the uptilt beam index information indicates uptilt beams in beams in the cell.

The first information further includes uptilt beam coverage information, and the uptilt beam coverage information indicates coverage of the uptilt beam.

The coverage of the uptilt beam includes height coverage of the uptilt beam and/or width coverage of the uptilt beam.

The processing module 910 is configured to access the cell based on the uptilt beam information.

In an optional implementation, the processing module 910 measures beams in the cell, and accesses the cell based on a first beam, where measurement of the first beam satisfies a reference signal received power RSRP threshold or a reference signal received quality RSRQ threshold, and the first beam is included in the beams in the cell.

In an optional implementation, the processing module 910 accesses the cell based on the uptilt beam index information.

In an optional implementation, the processing module 910 measures the uptilt beams indicated by the uptilt beam index information, and accesses the cell based on a first uptilt beam, where measurement of the first uptilt beam satisfies an RSRP threshold or an RSRQ threshold, and the first uptilt beam is included in the uptilt beams indicated by the uptilt beam index.

In an optional implementation, the processing module 910 starts a timer, measures the beams in the cell, and accesses the cell based on the first beam, where the measurement of the first beam satisfies the RSRP threshold and the RSRQ threshold before the timer ends, and the first beam is included in the beams in the cell.

The foregoing describes some examples in which the communication apparatus 900 is configured to implement the functions of the terminal device in the method embodiments shown in FIG. 6, FIG. 7, or FIG. 8. For functions of the processing module 910 and the transceiver module 920 in the communication apparatus 900, refer to the operations of the terminal device in the method embodiment shown in FIG. 6, FIG. 7, or FIG. 8.

The communication apparatus 900 may be alternatively configured to implement the functions of the network device in the method embodiment shown in FIG. 6, FIG. 7, or FIG. 8. When the communication apparatus 900 is configured to implement the functions of the network device in the method embodiment shown in FIG. 6, FIG. 7, or FIG. 8, an example is provided as follows.

The transceiver module 920 is configured to send first information to a terminal device, where the first information includes uptilt beam information, the uptilt beam information indicates that there is an uptilt beam in a cell, and the uptilt beam information is for assisting the terminal device in accessing the cell.

The first information further includes uptilt beam index information, and the uptilt beam index information indicates an uptilt beam in beams in the cell.

The first information further includes uptilt beam coverage information, and the uptilt beam coverage information indicates coverage of the uptilt beam.

The coverage of the uptilt beam includes height coverage of the uptilt beam and/or width coverage of the uptilt beam.

According to the foregoing communication method, the terminal device may determine, based on the uptilt beam information, a cell having an uptilt beam, may determine a specific uptilt beam based on the uptilt beam index information, and may determine, based on the uptilt beam coverage information, whether an uptilt beam is suitable, so that the terminal device selects the suitable uptilt beam to access the cell, thereby ensuring signal quality, and avoiding frequent switching or even data flow interruption.

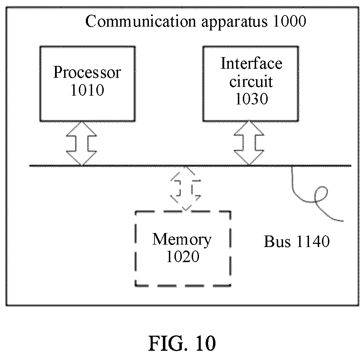

FIG. 10 is still another block diagram of a communication apparatus according to an embodiment of this application. As shown in FIG. 10, the communication apparatus 1000 includes a processor 1010 and an interface circuit 1030. The processor 1010 is coupled to the interface circuit 1030. It may be understood that the interface circuit 1030 may be a transceiver or an input/output interface.

Optionally, the communication apparatus 1000 may further include a memory 1020 configured to: store instructions executed by the processor 1020, store input data required by the processor 1010 to run the instructions, or store data generated after the processor 1010 runs the instructions.

When the communication apparatus 1000 is configured to implement functions of the network device and the terminal device shown in FIG. 6, FIG. 7, or FIG. 8, the processor 1010 is configured to implement the function of the processing module 910, and the interface circuit 1030 is configured to implement the function of the transceiver module 920.

Optionally, the communication apparatus 1000 further includes a bus 1040. The processor 1010, the interface circuit 1030, and the memory 1020 may communicate with each other through the bus 1040.

An embodiment of this application further provides a system chip. The system chip includes an input/output interface, at least one processor, at least one memory, and a bus. The at least one memory is configured to store instructions, and the at least one processor is configured to invoke instructions in the at least one memory, to perform operations of the methods in the foregoing aspects.

This application further provides a computer-readable storage medium. The computer-readable storage medium stores a computer program. When the computer program is executed by a computer, a function in any one of the foregoing method embodiments is implemented.

This application further provides a computer program product. The computer product includes a computer program (which may also be referred to as code or an instruction). When the computer program product is executed by a computer, a function in any one of the foregoing method embodiments is implemented.

In embodiments of this application, it should be noted that the foregoing method embodiments in embodiments of this application may be applied to a processor, or may be implemented by a processor. The processor may be an integrated circuit chip and has a signal processing capability. In an implementation process, steps in the foregoing method embodiments may be implemented by using a hardware integrated logical circuit in the processor, or by using instructions in the form of software. The processor may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) serving as an external cache. Through example but not limited descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and method described in this specification includes but is not limited to these and any other suitable types of memories.

All or some of the foregoing embodiments may be implemented by using software, hardware, firmware, or any combination thereof. When software is used to implement embodiments, all or a part of embodiments may be implemented in the form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state disk (Solid-State Disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium, and includes several instructions for enabling a computer device (which may be such as a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a network device, wherein the first information comprises uptilt beam information, and the uptilt beam information indicates that there is an uptilt beam in a cell; and
accessing the cell based on the uptilt beam information.

2. The method according to claim 1, wherein the accessing the cell based on the uptilt beam information comprises:
measuring beams in the cell, and accessing the cell based on a first beam, wherein measurement of the first beam satisfies a reference signal received power RSRP threshold or a reference signal received quality RSRQ threshold, and the first beam is comprised in the beams in the cell.

3. The method according to claim 1, wherein the first information further comprises uptilt beam index information, and the uptilt beam index information indicates uptilt beams in beams in the cell; and the method further comprises:
accessing the cell based on the uptilt beam index information.

4. The method according to claim 3, wherein the accessing the cell based on the uptilt beam index information comprises:
measuring the uptilt beams indicated by the uptilt beam index information, and accessing the cell based on a first uptilt beam, wherein measurement of the first uptilt beam satisfies an RSRP threshold or an RSRQ threshold, and the first uptilt beam is comprised in the uptilt beams indicated by the uptilt beam index information.

5. The method according to any one of claims 1 to 4, wherein the first information further comprises uptilt beam coverage information, and the uptilt beam coverage information indicates coverage of the uptilt beam.

6. The method according to claim 5, wherein the coverage of the uptilt beam comprises height coverage of the uptilt beam and/or width coverage of the uptilt beam.

7. The method according to any one of claims 1 to 6, wherein the method further comprises:
starting a timer, measuring the beams in the cell, and accessing the cell based on the first beam, wherein the measurement of the first beam satisfies the RSRP threshold or the RSRQ threshold before the timer ends, and the first beam is comprised in the beams in the cell.

8. A communication method, comprising:
sending first information to a terminal device, wherein the first information comprises uptilt beam information, the uptilt beam information indicates that there is an uptilt beam in a cell, and the uptilt beam information is for assisting the terminal device in accessing the cell.

9. The method according to claim 8, wherein the first information further comprises uptilt beam index information, and the uptilt beam index information indicates an uptilt beam in beams in the cell.

10. The method according to claim 8, wherein the first information further comprises uptilt beam coverage information, and the uptilt beam coverage information indicates coverage of the uptilt beam.

11. The method according to claim 10, wherein the coverage of the uptilt beam comprises height coverage of the uptilt beam and/or width coverage of the uptilt beam.

12. A communication apparatus, comprising: a processor, wherein the processor is coupled to a memory, the memory is configured to store a program or instructions, and when the program or the instructions are executed by the processor, the apparatus is enabled to perform the method according to any one of claims 1 to 7 or the method according to any one of claims 8 to 11.

13. A communication apparatus, wherein the apparatus is configured to perform the method according to any one of claims 1 to 7 or the method according to any one of claims 8 to 11.

14. A communication apparatus, wherein the apparatus comprises a module configured to perform the method according to any one of claims 1 to 7 or the method according to any one of claims 8 to 11.

15. A computer-readable storage medium, wherein the computer-readable storage medium stores a computer program or instructions, and when the computer program or the instructions are executed, a computer is enabled to perform the method according to any one of claims 1 to 7 or the method according to any one of claims 8 to 11.

16. A computer program product, wherein the computer program product comprises computer program code, and when the computer program code is run on a computer, the computer is enabled to implement the method according to any one of claims 1 to 7 or the method according to any one of claims 8 to 11.

17. A chip, comprising a processor, wherein the processor is coupled to a memory, the memory is configured to store a program or instructions, and when the program or the instructions are executed by the processor, the chip is enabled to perform the method according to any one of claims 1 to 7 or the method according to any one of claims 8 to 11.

18. A communication system, comprising the communication apparatus configured to perform the method according to any one of claims 1 to 7 and the method according to any one of claims 8 to 11.
